# EUROPEAN PATENT APPLICATION

(11) **EP 4 722 008 A1**
(43) Date of publication of application: **08.04.2026**
(21) Application number: 25205141.2
(22) Date of filing: 26.09.2025
(51) Int. Cl.: B60H 1/00

(54) **AIRFLOW OPTIMIZATION FOR CABIN COMFORT**

(30) Priority: 02.10.2024 US 202418904710
(71) Applicant: Tesla, Inc., Austin, TX 78725 (US)
(72) Inventor: HANKS, Daniel F., Austin, Texas, 78725 (US); BUECKER, Daniel Keenan, Austin, Texas, 78725 (US)
(74) Representative: Bryn-Jacobsen, Caelia

(57) **Abstract**

Disclosed examples relate to a Heating, Ventilation, and Air Conditioning (HVAC) apparatus for a vehicle. The apparatus includes a suction HVAC unit with a plenum, a hot air pocket extraction duct connected to the plenum, and one or more suction intakes connected to the hot air pocket extraction duct. The hot air pocket extraction duct is configured to draw hot air from a hot air pocket in the vehicle through the suction intakes into the plenum. The apparatus may include dashboard and/or roof suction intakes positioned in regions prone to hot air pocket formation. Methods for controlling climate in a vehicle cabin using the apparatus, manufacturing a vehicle with the apparatus, and optimizing the HVAC system are also described.

## Description

### TECHNICAL FIELD

The present disclosure relates generally to vehicle climate control systems and, in some examples, to systems and processes to enhance occupant comfort by optimizing air distribution within the cabin. More specifically, some examples provide methods and apparatuses for reducing temperature stratification by employing suction mechanisms that remove hot air pockets, thereby improving the uniformity of the thermal environment experienced by vehicle occupants.

### BACKGROUND

In the field of vehicle climate control systems, maintaining a comfortable cabin environment can pose several challenges due to varying external weather conditions and the inherent design of vehicle cabins. Solar radiation can significantly increase cabin temperatures especially in sun-exposed areas leading to uneven temperature distributions within the cabin space. Traditional HVAC systems in vehicles try to counteract these effects by circulating cooled or heated air throughout the interior. However, the effectiveness of these systems can be compromised by the complex dynamics of air movement, including the mixing of air streams and the presence of thermal loads from sunlight. This often results in varied thermal comfort levels for occupants, depending on their location within the vehicle. The challenge is further compounded in larger vehicles or those with unique interior designs, where air distribution needs to be managed over greater distances or around structural obstacles.

### BRIEF SUMMARY

Disclosed examples herein seek to enhance the comfort of vehicle occupants by addressing the challenge of temperature stratification within the cabin. Temperature stratification refers to a phenomenon where different areas within the same enclosed space, such as a vehicle cabin, experience significantly different temperatures. This can lead to discomfort for occupants as some parts of the body may feel excessively warm while others might feel uncomfortably cold.

Some described examples utilize a combination of suction and pressure systems integrated with the vehicle's Heating, Ventilation, and Air Conditioning (HVAC) system to manage and distribute cabin air more effectively. By adjusting how air is moved around the cabin, these systems seek to create a more uniformly comfortable environment, reducing the temperature differences that occupants experience.

One component of the disclosed technology is the HVAC system itself that traditionally controls the temperature by heating or cooling the air and then distributing it throughout the cabin via a series of vents. An example HVAC system disclosed herein works in conjunction with strategically configured hot air pocket extraction ducting to maintain a desired temperature set by the occupants. Hot air pockets may be created for example in a region under the windscreen above the vehicle dashboard, or in elevated cabin areas such as under the cabin roof or near a window. Hot air pockets can be particularly problematic after long periods of sun exposure and heat buildup within the vehicle cabin. In some examples, hot air pocket extraction ducting is located above or inside the instrument panel (IP) and includes one or more suction intakes located in the region of a hot air pocket, for example in an upper surface of a dashboard or in a cabin roof liner.

In some examples, a "hot pocket" region in the context of this disclosure may be defined as a localized area within a vehicle cabin that experiences significantly higher temperatures compared to the surrounding cabin environment, typically due to solar radiation or heat buildup. These regions may be characterized by formation in specific locations prone to heat accumulation, such as the area between the windshield and dashboard, near the roof or under glass top panels, and/or elevated cabin areas.

In some examples, a "hot pocket" includes one or more of the following characteristics: contains a static pocket of hot air that can adversely affect occupant thermal comfort; contributes to temperature stratification within the vehicle cabin; is typically formed after prolonged sun exposure, includes a temperature noticeably higher than the average cabin temperature, creating distinct thermal gradients; resists uniform temperature distribution by conventional HVAC systems; and/or is potentially entrained into cooler air streams, impairing the overall cooling efficiency of the HVAC system.

In addition to standard HVAC functionalities, some described examples incorporate suction mechanisms that specifically target the hottest areas within the cabin. These areas, as mentioned often near windows, the roof, or the dashboard, can become significantly warmer than the rest of the interior due to direct sunlight. The suction mechanisms work by drawing out the hot air from these areas and redirecting it towards the HVAC system for cooling before it is recirculated back into the cabin.

The integration of these components and their functions is managed in some examples through a control system that monitors various factors such as the temperature distribution within the cabin, the external temperature, and the intensity of sunlight entering the vehicle. Sensors placed throughout the cabin provide real-time data that the control system uses to adjust the operation of the HVAC system, suction units, and other components accordingly.

Some described examples also consider the energy efficiency of the system. By optimizing the use of suction and extraction, the technology disclosed herein aims to reduce the need for the HVAC system to work excessively hard, which can lead to lower energy consumption and improved vehicle efficiency. In conventional systems that do not include a hot air pocket suction mechanism of the type described herein, , a primary alternative to maintain a comfortable cabin environment is to increase HVAC airflow to break up temperature stratification, however increased airflow consumes more HVAC energy. Counterintuitively, in some present examples, spending more energy to address or cool extra hot regions of the cabin can maintain cabin comfort without the need for higher airflow, resulting in HVAC energy savings in some examples. This may be particularly beneficial in electric vehicles, where energy efficiency directly correlates with the driving range of the vehicle.

Furthermore, some described examples are designed to be adaptable to different vehicle designs and sizes. Whether for a compact car or a larger SUV (for example, a cyber truck), the components disclosed herein can be configured to fit the specific needs of a vehicle's interior layout. This adaptability seeks to ensure that the benefits of the technology can be realized across a wide range of vehicle types.

Thus, in some examples, the technology described herein provides a configurable yet practical way to address the problem of temperature stratification in vehicle cabins. By combining traditional HVAC systems with innovative suction and extraction mechanisms, in some examples controlled by a climate control system, example systems and methods seeks to enhance the comfort of all occupants by creating a more evenly distributed thermal environment within the vehicle. This approach seeks not only to improve occupant comfort but also contributes to the overall energy efficiency of the vehicle, making it a useful addition to modern automotive systems.

### BRIEF DESCRIPTION OF THE SEVERAL VIEWS OF THE DRAWINGS

Throughout the drawings, reference numbers may be re-used to indicate correspondence between referenced elements. The drawings are provided to illustrate examples of the subject matter described herein and not to limit the scope thereof.
**FIG. 1** is a schematic diagram illustrating an interior of a vehicle cabin with a conventional HVAC system, according to some examples.
**FIG. 2** is a schematic diagram illustrating an interior of a vehicle cabin with an HVAC system including a suction HVAC unit and hot air pocket extraction, according to some examples.
**FIG. 3A** is a schematic diagram illustrating components of a suction HVAC unit, according to some examples.
**FIG. 3B** is a schematic diagram illustrating an example air circulation and distribution arrangement for a suction HVAC unit, according to some examples.
**FIG. 4** is a schematic diagram illustrating an example configuration of an HVAC system including a suction HVAC unit located behind an instrument panel of a vehicle, according to some examples.
**FIG. 5** is a schematic diagram illustrating an interior of a large vehicle with roof suction intakes, according to some examples.
**FIG. 6** is a graph representing an average temperature decrease across the face of an occupant in a vehicle with an example HVAC system of the present disclosure, according to some examples.
**FIG. 7A** is a graph indicating example blower speeds (in RPM) to maintain the indicated temperature ranges at an ambient level, according to some examples.
**FIG. 7B** is a graph indicating example blower speeds (in RPM) to maintain the indicated temperature ranges at a cabin level, according to some examples.
**FIG. 8A** is a graph indicating example mean compressor power levels in Watts (W) to maintain the indicated temperature ranges at an ambient level, according to some examples.
**FIG. 8B** is a graph indicating mean compressor power levels (W) to maintain the indicated temperature ranges at a cabin level, according to some examples. Example temperature ranges indicated in the graphs of **FIGS. 7A-7B****, and** **FIG. 8A-8B** were derived from an example engineering fleet of electric vehicles.
**FIG. 9** is a flowchart illustrating a method of controlling climate in a vehicle cabin, according to some examples.
**FIG. 10** is a flowchart illustrating a method of manufacturing a vehicle having a climate control system, according to some examples.
**FIG. 11** is a flowchart illustrating a method of optimizing a vehicle HVAC system, according to some examples.

### DETAILED DESCRIPTION

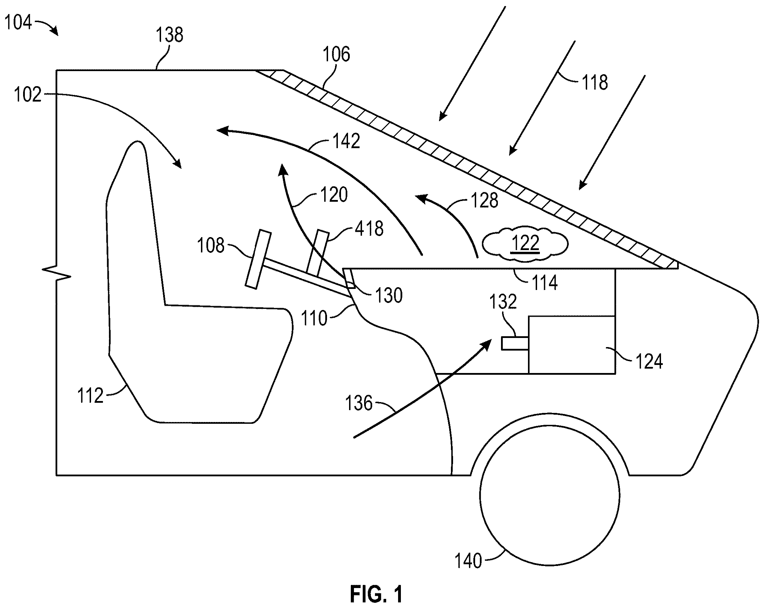

With reference to the schematic diagram of **FIG. 1****,** an interior of an example vehicle cabin 102 of a vehicle 104 is generally shown. The vehicle 104 rides on one or more wheels 140 and may include a chassis (not shown), and/or a shell or exoskeleton 138. The vehicle 104 includes a glass windshield 106, a steering wheel 108, a driver seat 112, and an array of instruments or display panels located in an instrument panel shown generally at instrument panel 110 in a generally vertical plane. The instrument panel may include a display screen 418. A generally horizontal dashboard 114 is provided above the instrument panel 110 and is located beneath the windshield 106, as shown in the illustrated schematic example. Other vehicle components and arrangements are possible.

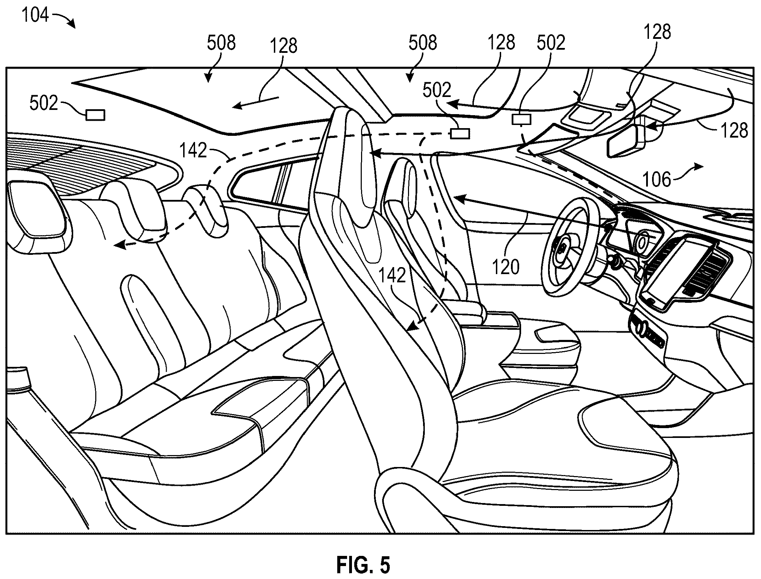

In sunny weather, sunlight 118 enters the vehicle cabin 102 through the glass windshield 106. Strong temperature gradients can form inside the vehicle cabin 102 and adversely affect thermal comfort for occupants. Sometimes this adverse thermal effect can be very strong and create a distinctly uncomfortable environment for occupants. A static pocket of very hot air (such as hot air pocket 122) can be formed for example in a region between the windshield 106 and the dashboard 114. Hot air pockets may be formed in other regions, for example at the top of the windshield 106, and/or just under the vehicle roof (see **FIG. 5** for example).

While blowing cold air 120 sourced from a conventionally ducted HVAC unit 124 from one or more HVAC vents 130 in the vehicle dashboard 114 into the vehicle cabin 102 can counteract solar loads, this stream of cold air 120 can exacerbate temperature gradients. For example, hot air 128 sourced from the hot air pocket 122 can become entrained at entrainment 142 into the jets of cold air 120 blowing from the HVAC vents 130 and impair the ability of the HVAC unit 124 to cool occupants. This cooling ability can remain significantly impaired notwithstanding the ability of some HVAC systems to recirculate relatively cool cabin air (for example, at cabin air recirculation 136) into a recirculation inlet 132 of the HVAC unit 124 instead of drawing relatively warm air from outside the vehicle 104.

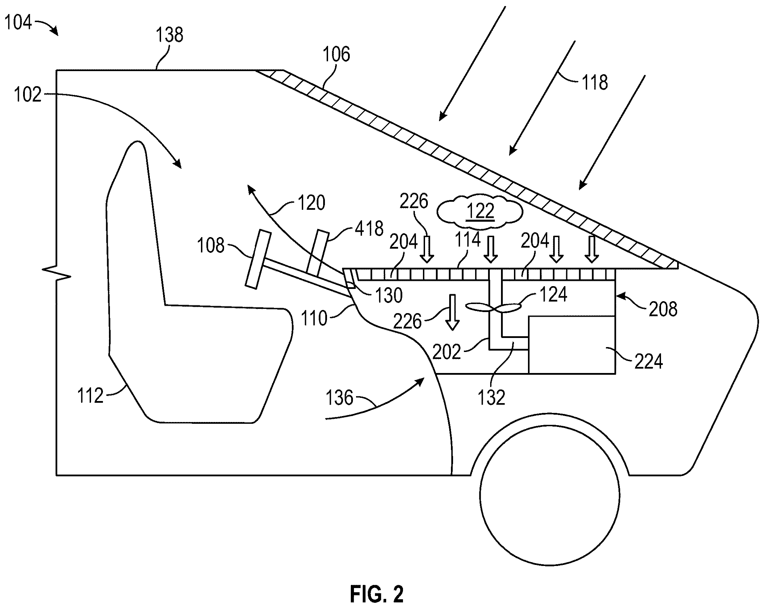

With reference to **FIG. 2** on the other hand, some examples of an HVAC system 208 (also known as a climate control system) herein seek to provide a solution to the problems described above. These examples generally seek to mitigate formation of temperature gradients by purging the hottest pockets of air in the cabin with suction pressure of an HVAC unit intake or with positive pressure through the use of air extractors. By cutting down the highest temperature sources of air, the uniformity of the air space around occupants can be improved resulting in a more comfortable thermal environment.

For example in this regard, a suction HVAC unit 224 of the illustrated HVAC system 208 is provided with a hot air pocket extraction duct 202. In the illustrated example, the hot air pocket extraction duct 202 is connected at a distal end thereof (relative to an air suction flow within the hot air pocket extraction duct 202) to the recirculation inlet 132 of the suction HVAC unit 224, and connected at a proximal end thereof to one or more dashboard suction intakes 204 provided in the upper surface of the dashboard 114 of the vehicle 104. At least the suction HVAC unit 224, one or more hot air pocket extraction ducts 202, and one or more dashboard suction intakes 204 form part of HVAC apparatus for an HVAC system 208, in some examples. The HVAC system 208 and the HVAC apparatus may include further or other components as described herein.

The one or more dashboard suction intakes 204 are provided directly in, or immediately adjacent, the region of the hot air pocket 122 and suck hot air from the hot air pocket 122 into the suction HVAC unit 224 directly from that region. This suction is shown generally by the suction air flow 226 arrows. Suction pressure to create the suction air flow 226 may be generated by the suction HVAC unit 224 and/or a blower 228. Other arrangements are possible. Rather than passing into the already hot vehicle cabin 102 as occurs in conventional systems described above, the significantly hotter air residing in the hot air pocket 122 is instead pulled directly into the suction HVAC unit 224 for treatment. Additionally, this reverse or alternate direction of the hot pocket air avoids or at least minimizes the creation of the counterproductive hot air entrainment flows described above.

While some cold air 120 may still be directed conventionally at occupants, in conjunction with possible cabin air recirculation 136 for example as shown, the illustrated HVAC system 208 draws out the hot air from hotter areas (such as the hot air pocket 122) and redirects it directly towards the suction HVAC unit 224 for cooling before it is recirculated or re-blown back into the vehicle cabin 102.

In some examples, air drawn in by the dashboard suction intakes 204 supplements air drawn in from the vehicle cabin 102 by the cabin air recirculation 136 and enters the recirculation inlet 132 of the suction HVAC unit 224 jointly therewith. Other arrangements are possible, and more specific examples are now described.

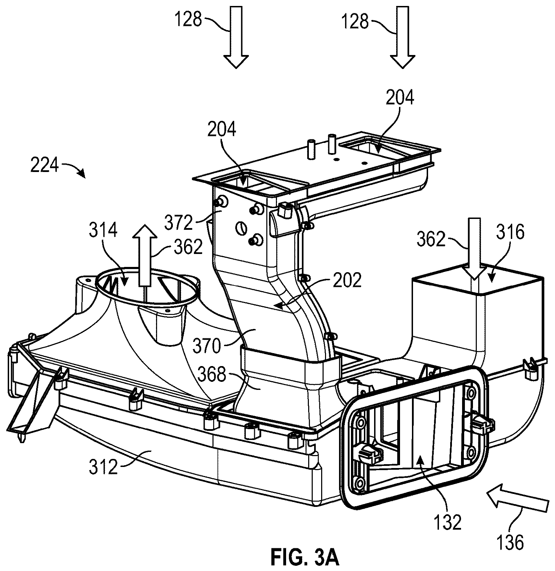

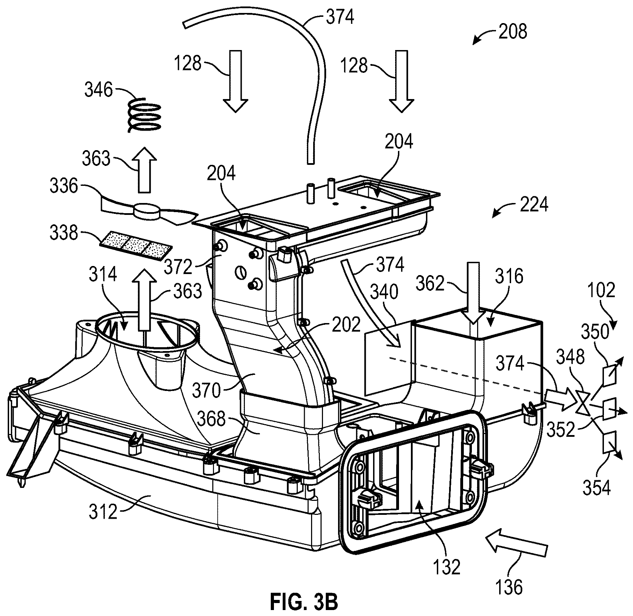

With reference now to **FIG. 3A****,** some example components of a suction HVAC unit 224 are now described. The suction HVAC unit 224 includes a main or central plenum 312. The plenum 312 may include or accommodate one or more internal components, or be connected to other components of the suction HVAC unit 224 or the HVAC system 208. In the interest of clarity, some of these components (such as blowers, valves, compressors, coils, and so forth) are not shown in the attached drawings, but merely by way of example in this regard, the plenum 312 may include or be connected to an internal or external circulation fan (for example, the blower 228 of **FIG. 2****,** or the blower 336 of FIG. 3B) to drive air in or out of the suction HVAC unit 224. The plenum 312 may also include or be connected to one or more heating or cooling coils, and/or an HVAC compressor, to heat or cool air inside the plenum 312 for distribution to areas of the vehicle cabin 102, as described more fully below.

In some examples, the suction HVAC unit 224 includes one or more air inlets and outlets, such as an air outlet 314, and/or an air inlet 316 to pull in fresh air 362 into the plenum 312.. Other arrangements of air inlets and outlets are possible. In some examples, the suction HVAC unit 224 further includes a recirculation inlet 132 which may receive air drawn from one or more recirculation or resupply sources, for example the cabin air recirculation 136 of **FIG. 2****.** The one or more recirculation or resupply sources may additionally or alternatively include a region behind the instrument panel 110, or a region outside the instrument panel 110 but inside the vehicle cabin 102, or a region outside the vehicle 104 (for example, external air), or a region defined by a hot air pocket 122 and supplied to the recirculation inlet 132 via a hot air pocket extraction duct 202, for example as described above. The hot air pocket extraction duct 202 and the dashboard suction intakes 204 are described in more detail below. Other recirculation or resupply sources are possible.

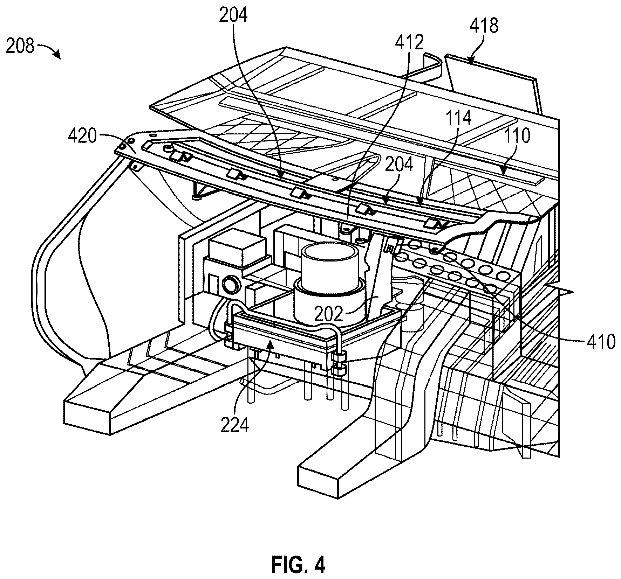

In **FIG. 3A****,** the plenum 312 is connected by a connector 368 to a first end 370 of a hot air pocket extraction duct 202 as shown. The hot air pocket extraction duct 202 is connected at a second end 372 thereof to one or more dashboard suction intakes 204. In the illustrated example, two dashboard suction intakes 204 are shown. Other arrangements or configurations of suction intakes are possible. The dashboard suction intakes 204 are mounted in the dashboard 114 of a vehicle 104 to draw in hot air 128, for example as shown in **FIG. 2** described above, or in **FIG. 4** described further below. In other examples, the hot air pocket extraction duct 202 may be additionally or alternatively connected to one or more roof suction intakes 502 for examples as shown in **FIG. 5****.** Further and or other suction intakes may be provided in other identified hot air pocket regions of a vehicle cabin 102.

In some examples, the suction HVAC unit 224 and/or the plenum 312 may include internal valves configured and/or controlled to direct received and/or supplied air through any one or more of the hot air pocket extraction duct 202, the dashboard suction intakes 204, the recirculation inlet 132, the first air outlet 314, and the second air outlet 316. An example air circulation and distribution arrangement is nevertheless provided in **FIG. 3B** in schematic outline merely for illustrative purposes. Other arrangements are possible.

In the example air circulation and distribution arrangement of **FIG. 3B****,** an HVAC blower 336 is activated, manually or in some cases automatically, by a vehicle climate control system such as an HVAC system 208. The HVAC blower 336 may be activated in conjunction with another blower or circulation fan, such as the blower 228 of **FIG. 2****.** Suction pressure created by the HVAC blower 336 (and/or blower 228) causes at least two streams of air flow into the suction HVAC unit 224.

In a first air flow stream, recycled air 136 from inside the vehicle cabin 102 (and/or resupplied fresh air 362 drawn from outside the vehicle 104) enters the plenum 312 of the suction HVAC unit 224, as shown at cabin air recirculation 136 for example. In a second air flow stream, hot air 128 from a hot air pocket 122 (e.g. **FIG. 1****)** is drawn into the dashboard suction intakes 204 and enters the suction HVAC unit 224 for cooling via the hot air pocket extraction duct 202. The hot air 128 from the hot air pocket 122 enters the plenum 312 where it may (or may not, in some examples) be combined with the recycled air (for example, the cabin air recirculation 136 entering at recirculation inlet 132), and/or resupplied air (for example the fresh air 362 entering at air inlet 316).

The combined (or respective) streams of air 363 pass through one or more filters (for example, the filter 338) and are urged by the HVAC blower 336 through a region of heating or cooling coils 346 of the suction HVAC unit 224 to be conditioned accordingly. The region of heating or cooling coils 346 may for example be disposed between the HVAC blower 336 and an air-sealed cabin boundary 340 provided between the interior and the exterior of the vehicle cabin 102. In some examples, the recirculation inlet 132 is located in the cabin boundary 340. Conditioned air 374 flows from the heating or cooling coils 346 to the cabin boundary 340 where it may be dispensed through one or more vents into the vehicle cabin 102. For example, a series of air director valves 348 can be invoked manually or automatically to direct conditioned air 374 (cooled or heated) to one or more dashboard vents 350 (for example, for demisting the windshield 106), or one or more instrument panel vents 352 (for example to be aimed at an occupant's face or torso), and one or more footwell vents 354 (for example, to be aimed at an occupant's feet).

**FIG. 4** shows an example configuration of an HVAC system 208 including a suction HVAC unit 224 located behind an instrument panel 110 of a vehicle 104. The instrument panel 110 may be provided in association with one or more display screens 418. The suction HVAC unit 224 includes or is connected to a lower end (for example at first end 370, **FIG. 3A****)** of the hot air pocket extraction duct 202, as shown. At an upper end (for example at second end 372, **FIG. 3A****),** the hot air pocket extraction duct 202 is connected to one or more dashboard suction intakes 204 located in the dashboard 114 of the vehicle 104. In some examples, the dashboard suction intakes 204 are located in a frame 420. Some interconnecting ducting between the upper end of the hot air pocket extraction duct 202 and the dashboard suction intakes 204 is not shown in the interest of clarity.

The suction HVAC unit 224 may include an actuator 410 disposed at the upper end of the hot air pocket extraction duct 202 to open or close the dashboard suction intakes 204 manually or automatically, for example in response to a signal received from a climate control system such as the HVAC system 208. A seal 412 provided in the frame 420 may assist to seal the frame 420 and/or the dashboard suction intakes 204 with respect to the windshield 106 and/or the cabin boundary 340. The frame 420 locates the dashboard suction intakes 204 in the dashboard 114. In some examples, the seal 412 may help to define at least part of the interior/exterior cabin boundary 340 discussed above.

In some examples, an existing or conventional HVAC unit 124 in a vehicle 104 is retrofitted with one or more hot air pocket extraction ducts 202 and/or one or more dashboard suction intakes 204 to provide the airflow optimization and cooling benefits described herein. In some further examples, one or more dashboard vents 350, typically used for windshield 106 demisting for example, may be repurposed and operated in reverse to act as dashboard suction intakes 204 with the conventional demisting ducting similarly operated in reverse to purge hot air 128 from a hot air pocket 122 and send to the suction HVAC unit 224 or a retrofitted HVAC unit 124 for cooling, filtering, and/or further conditioning.

In **FIG. 5****,** an interior of a relatively large vehicle 104is shown. The vehicle 104 has a large windshield 106 and one or more clear or see-through glass top panels 508 that can create a significant temperature stratification problem. Stagnant hot air 128 can accumulate in hot air pockets 122 near the roof or the glass top panels 508 and can become entrained, for example as shown at entrainments 142, by strong jets of cold air 120. To address this problem, in this example one or more roof suction intakes 502 are provided to purge hot air pockets 122 near the roof. The roof suction intakes 502 may operate in a similar manner as the dashboard suction intakes 204 described above. In other words, instead of entraining hot air 128 deeper into the already hot vehicle cabin 102 as occurs in conventional systems, the hot air 128 residing in the hot air pockets 122 under the roof or glass top panels 508 is instead pulled directly into the suction HVAC unit 224 (or retrofitted HVAC unit 124) for treatment.

Additionally, this reverse or alternate direction of the hot air 128 avoids or at least mitigates the creation of counterproductive hot air entrainment flows described above. In some examples, the roof suction intakes 502 are provided in a headliner trim in addition to one or more dashboard suction intakes 204 provided in the dashboard 114 to create or improve an occupant comfort bubble, for example as described further below. Further example applications for disclosed HVAC systems 208 include parcel shelf cooling and the purging of hot air pockets 122 around a passenger or a seat, such as the driver seat 112, for example.

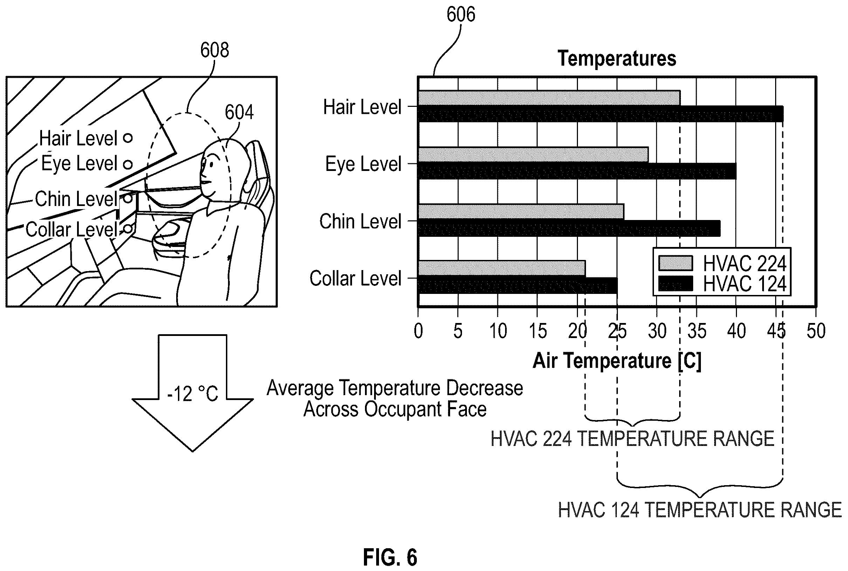

**FIG. 6** represents an average temperature decrease across the face of an occupant 604 sitting in a vehicle 104 provided with an HVAC system 208 (including a suction HVAC unit 224) of the present examples. As shown, an example temperature decrease (or gradient) of 12 degrees Celsius was assessed across a hair level, eye level, chin level, and a collar level of the occupant 604. Respective temperature values at these levels for a vehicle 104 having suction HVAC unit 224 of the present disclosure as compared to a vehicle 104 only having a conventional HVAC unit 124 are provided in the temperature graph 606.

From a review of the indicated temperature range provided by a conventional HVAC unit 124 (i.e., 25 to 46 degrees Celsius) compared against a temperature range for a suction HVAC unit 224 (i.e., 21 to 33 degrees Celsius), it will be noted that not only are cabin temperatures provided by an HVAC system 208 (having a suction HVAC unit 224) generally cooler in general, but also more uniformly provided. Temperature stratification is significantly addressed, accordingly.

In some examples, a comfort bubble of an occupant of a vehicle fitted with a conventional HVAC system 124 is relatively small and perceptively warmer compared to a larger and perceptively cooler comfort bubble 608 of the occupant 604 of **FIG. 6** seated in a vehicle 104 provided with an HVAC system 208 and suction HVAC unit 224 of the type described herein.

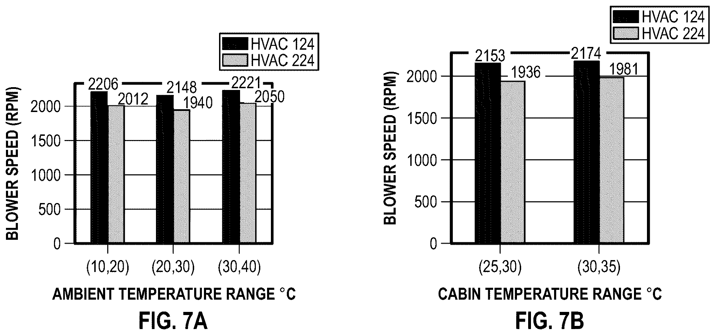

**FIGS. 7A-7B** show graphs indicating respective blower speeds (in RPM) to maintain the indicated cabin temperature ranges for an HVAC blower (such as the HVAC blower 336 described above) assessed at an ambient level **(****FIG. 7A****),** and a cabin level **(****FIG. 7B****)** in a vehicle 104 fitted with a conventional HVAC unit 124 as compared to a vehicle 104 having a suction HVAC unit 224 as described herein. It will be seen that the blower speeds for the suction HVAC unit 224 are appreciably lower.

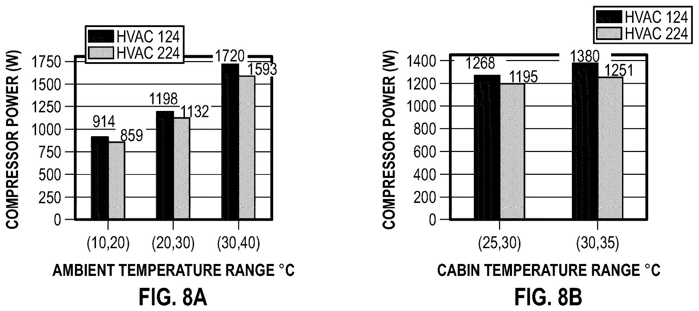

Similarly, for the same assessment levels, **FIGS. 8A-8B** show graphs indicating respective mean compressor power levels (in W) to maintain the indicated cabin temperature ranges for an HVAC compressor (such as the HVAC compressor mentioned above) assessed at an ambient level **(****FIG. 8A****),** a cabin probe level **(****FIG. 8B****)** in a vehicle 104 fitted with a conventional HVAC unit 124 as compared to a vehicle 104 having a suction HVAC unit 224 as described herein. It will be seen that the mean power levels of a compressor in the suction HVAC unit 224 are appreciably lower.

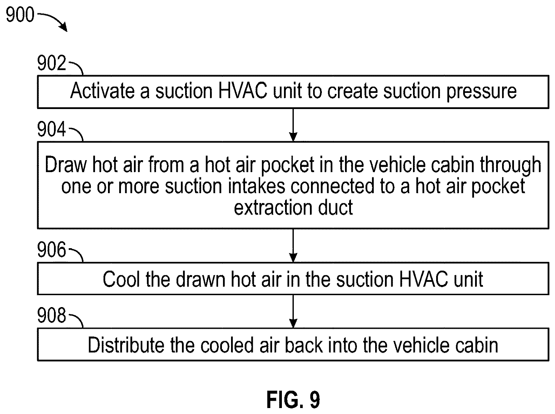

Some examples herein include methods of controlling climate in a vehicle cabin, for example a vehicle cabin 102 of a vehicle 104 described above. With reference to **FIG. 9****,** an example method 900 of controlling climate in a vehicle cabin is now described. In operation 902, method 900 activates a suction HVAC unit 224 to create suction pressure. In operation 904, method 900 draws hot air from a hot air pocket in the vehicle cabin through one or more suction intakes connected to a hot air pocket extraction duct. In operation 906, method 900 cools the drawn hot air in the suction HVAC unit. In operation 908, method 900 distributes the cooled air back into the vehicle cabin.

The method 900 may also include where the one or more suction intakes comprise at least one dashboard suction intake configured to be mounted in a dashboard of the vehicle cabin. The method may also include where the one or more suction intakes comprise at least one roof suction intake configured to be mounted in a roof of the vehicle cabin. The method may also include detecting a temperature in the vehicle cabin, and activating the suction HVAC unit based on a detected temperature. The method may also include selectively opening and closing the one or more suction intakes based on a detected temperature in the vehicle cabin. The method may also include selectively switching between drawing air through the hot air pocket extraction duct and blowing air through the hot air pocket extraction duct for defrosting a windshield of the vehicle cabin. Other technical features may be readily apparent to one skilled in the art from the following figures, descriptions, and claims.

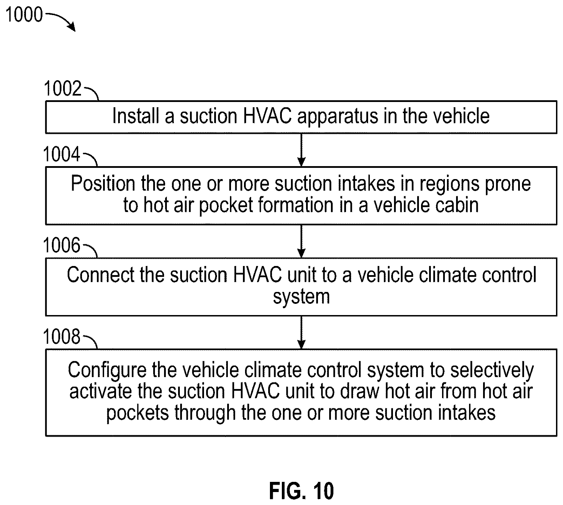

With reference to **FIG. 10****,** an example method 1000 of manufacturing a vehicle having a climate control system is now described. In operation 1002, method 1000 installs a suction HVAC apparatus 224 in the vehicle, the suction HVAC apparatus comprising a suction HVAC unit including at least a plenum, a recirculation inlet connected to the plenum, a hot air pocket extraction duct connected to the plenum , and one or more suction intakes connected to the hot air pocket extraction duct. In operation 1004, method 1000 positions the one or more suction intakes in regions prone to hot air pocket formation in a vehicle cabin. In operation 1006, method 1000 connects the suction HVAC unit to a vehicle climate control system. In operation 1008, method 1000 configures the vehicle climate control system to selectively activate the suction HVAC unit to draw hot air from hot air pockets through the one or more suction intakes.

The method 1000 may also include installing at least one dashboard suction intake in a region between a windshield and a dashboard of the vehicle, and installing at least one roof suction intake in a region of a roof of the vehicle. The method may also include installing a valve configured to selectively connect the hot air pocket extraction duct to either an inlet or an outlet of the suction HVAC unit, thereby enabling the hot air pocket extraction duct to be used for both hot air extraction and windshield defrosting. Other technical features may be readily apparent to one skilled in the art from the following figures, descriptions, and claims.

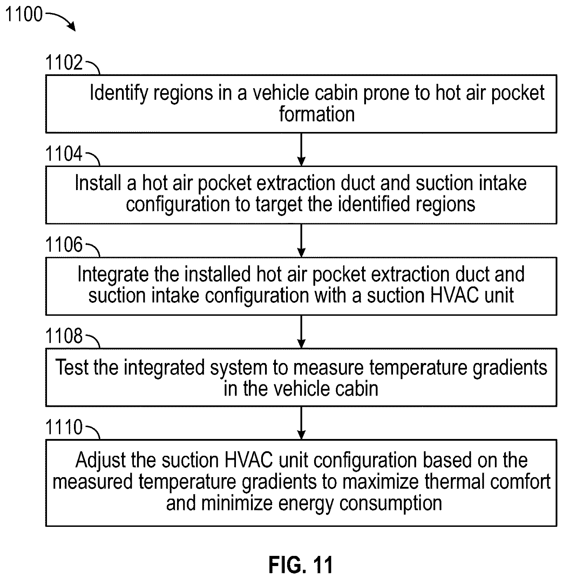

With reference to **FIG. 11****,** an example method 1100 of optimizing a vehicle HVAC system is now described. In operation 1102, method 1100 identifies regions in a vehicle cabin prone to hot air pocket formation. In operation 1104, method 1100 installs a hot air pocket extraction duct and suction intake configuration to target the identified regions. In operation 1106, method 1100 integrates the installed hot air pocket extraction duct and suction intake configuration with a suction HVAC unit. In operation 1108, method 1100 tests the integrated system to measure temperature gradients in the vehicle cabin. In operation 1110, method 1100 adjusts the suction HVAC unit configuration based on the measured temperature gradients to maximize thermal comfort and minimize energy consumption.

### EXAMPLES

Some examples may include one or more of the following aspects.

Example 1 includes a Heating, Ventilation, and Air Conditioning (HVAC) apparatus for a vehicle, comprising: a suction HVAC unit comprising a plenum; a hot air pocket extraction duct connected to the plenum; and one or more suction intakes connected to the hot air pocket extraction duct, wherein the hot air pocket extraction duct is configured to draw hot air from a hot air pocket in the vehicle through the one or more suction intakes into the plenum.

Example 2 includes the HVAC apparatus of example 1, wherein the one or more suction intakes comprise at least one dashboard suction intake configured to be mounted in a dashboard of the vehicle.

Example 3 includes the HVAC apparatus of example 1 or example 2, wherein the one or more suction intakes comprise at least one roof suction intake configured to be mounted in a roof of the vehicle.

Example 4 includes the HVAC apparatus of any one of examples 1-3, further comprising a recirculation inlet connected to the plenum.

Example 5 includes the HVAC apparatus of example 4, further comprising a circulation fan disposed in the plenum and configured to create suction pressure to draw air through the recirculation inlet and the hot air pocket extraction duct.

Example 6 includes the HVAC apparatus of any one of examples 1-5, further comprising one or more heating or cooling coils disposed in the plenum.

Example 7 includes the HVAC apparatus of any one of examples 1-6, further comprising an actuator configured to selectively open and close the one or more suction intakes.

Example 8 includes a vehicle HVAC system, comprising: an HVAC apparatus including: a suction HVAC unit comprising a plenum; a hot air pocket extraction duct connected to the plenum; and one or more suction intakes connected to the hot air pocket extraction duct, wherein the hot air pocket extraction duct is configured to draw hot air from a hot air pocket in a vehicle through the one or more suction intakes into the plenum; one or more air outlets connected to the plenum; and one or more air director valves configured to selectively direct conditioned air from the plenum to the one or more air outlets.

Example 9 includes the vehicle HVAC system of example 8, wherein the one or more suction intakes comprise at least one dashboard suction intake configured to be mounted in a dashboard of the vehicle.

Example 10 includes the vehicle HVAC system of example 8 or example 9, wherein the one or more suction intakes comprise at least one roof suction intake configured to be mounted in a roof of the vehicle.

Example 11 includes the vehicle HVAC system of any one of examples 8-10, wherein the one or more air outlets comprise at least one of: one or more dashboard vents; one or more instrument panel vents; and one or more footwell vents.

Example 12 includes the vehicle HVAC system of any one of examples 8-11, further comprising a valve configured to selectively connect the hot air pocket extraction duct to either an inlet or an outlet of the suction HVAC unit.

Example 13 includes a vehicle comprising: a cabin; a dashboard; a windshield; and a vehicle HVAC system comprising: a suction HVAC unit comprising a plenum; a hot air pocket extraction duct connected to the plenum; one or more suction intakes positioned in a region between the windshield and the dashboard and connected to the hot air pocket extraction duct, wherein the hot air pocket extraction duct is configured to draw hot air from a hot air pocket in the region through the one or more suction intakes into the plenum; one or more air outlets connected to the plenum; and one or more air director valves configured to selectively direct conditioned air from the plenum to the one or more air outlets.

Example 14 includes the vehicle of example 13, further comprising a roof including one or more glass panels, wherein the one or more suction intakes further comprise at least one roof suction intake positioned adjacent one or more glass panels.

Example 15 includes a method of controlling climate in a vehicle cabin, the method comprising: activating a suction HVAC unit to create suction pressure; drawing hot air from a hot air pocket in the vehicle cabin through one or more suction intakes connected to a hot air pocket extraction duct; cooling the drawn hot air in the suction HVAC unit; and distributing the cooled air back into the vehicle cabin.

Example 16 includes the method of example 15, wherein the one or more suction intakes comprise at least one dashboard suction intake configured to be mounted in a dashboard of the vehicle cabin.

Example 17 includes the method of example 15 or example 14, wherein the one or more suction intakes comprise at least one roof suction intake configured to be mounted in a roof of the vehicle cabin.

Example 18 includes the method of any one of examples 15-17, further comprising:
detecting a temperature in the vehicle cabin; and activating the suction HVAC unit based on a detected temperature.

Example 19 includes the method of any one of examples 15-18, further comprising: selectively opening and closing the one or more suction intakes based on a detected temperature in the vehicle cabin.

Example 20 includes the method of any one of examples 15-19, further comprising selectively switching between drawing air through the hot air pocket extraction duct and blowing air through the hot air pocket extraction duct for defrosting a windshield of the vehicle cabin.

Example 21 includes a method of manufacturing a vehicle having a climate control system, the method comprising: installing a suction HVAC apparatus in the vehicle, the suction HVAC apparatus comprising: a suction HVAC unit including a plenum; a recirculation inlet connected to the plenum; a hot air pocket extraction duct connected to the plenum; and one or more suction intakes connected to the hot air pocket extraction duct; positioning the one or more suction intakes in regions prone to hot air pocket formation in a vehicle cabin; connecting the suction HVAC unit to a vehicle climate control system; and configuring the vehicle climate control system to selectively activate the suction HVAC unit to draw hot air from hot air pockets through the one or more suction intakes.

Example 22 includes the method of example 21, further comprising: installing at least one dashboard suction intake in a region between a windshield and a dashboard of the vehicle; and installing at least one roof suction intake in a region of a roof of the vehicle.

Example 23 includes the method of example 21 or example 20, further comprising: installing a valve configured to selectively connect the hot air pocket extraction duct to either an inlet or an outlet of the suction HVAC unit, thereby enabling the hot air pocket extraction duct to be used for both hot air extraction and windshield defrosting.

Example 24 includes a method of optimizing a vehicle HVAC system, comprising: identifying regions in a vehicle cabin prone to hot air pocket formation; installing a hot air pocket extraction duct and suction intake configuration to target the identified regions; integrating the installed hot air pocket extraction duct and suction intake configuration with a suction HVAC unit; testing the integrated system to measure temperature gradients in the vehicle cabin; and adjusting the suction HVAC unit configuration based on the measured temperature gradients to maximize thermal comfort and minimize energy consumption.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

Although described methods herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

It should be emphasized that many variations and modifications may be made to the above-described examples, the elements of which are to be understood as being among other acceptable examples. All such modifications and variations are intended to be included herein within the scope of this disclosure.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

Further examples are set out in the clauses below:
1. A Heating, Ventilation, and Air Conditioning (HVAC) apparatus for a vehicle, comprising:
   a suction HVAC unit comprising a plenum;
   a hot air pocket extraction duct connected to the plenum; and
   one or more suction intakes connected to the hot air pocket extraction duct, wherein the hot air pocket extraction duct is configured to draw hot air from a hot air pocket in the vehicle through the one or more suction intakes into the plenum.
2. The HVAC apparatus of clause 1, wherein the one or more suction intakes comprise at least one dashboard suction intake configured to be mounted in a dashboard of the vehicle.
3. The HVAC apparatus of clause 1 or 2, wherein the one or more suction intakes comprise at least one roof suction intake configured to be mounted in a roof of the vehicle.
4. The HVAC apparatus of any one of the preceding clauses, further comprising a recirculation inlet connected to the plenum.
5. The HVAC apparatus of clause 4, further comprising a circulation fan disposed in the plenum and configured to create suction pressure to draw air through the recirculation inlet and the hot air pocket extraction duct.
6. The HVAC apparatus of any one of the preceding clauses, further comprising one or more heating or cooling coils disposed in the plenum.
7. The HVAC apparatus of any one of the preceding clauses, further comprising an actuator configured to selectively open and close the one or more suction intakes.
8. A vehicle HVAC system, comprising:
   an HVAC apparatus including:
   a suction HVAC unit comprising a plenum;
   a hot air pocket extraction duct connected to the plenum; and
   one or more suction intakes connected to the hot air pocket extraction duct, wherein the hot air pocket extraction duct is configured to draw hot air from a hot air pocket in a vehicle through the one or more suction intakes into the plenum;
   one or more air outlets connected to the plenum; and
   one or more air director valves configured to selectively direct conditioned air from the plenum to the one or more air outlets.
9. The vehicle HVAC system of clause 8, wherein the one or more suction intakes comprise at least one dashboard suction intake configured to be mounted in a dashboard of the vehicle, or at least one roof suction intake configured to be mounted in a roof of the vehicle.
10. The vehicle HVAC system of clause 8 or 9, wherein the one or more air outlets comprise at least one of:
   one or more dashboard vents;
   one or more instrument panel vents; and
   one or more footwell vents.
11. The vehicle HVAC system of clause 9, further comprising a valve configured to selectively connect the hot air pocket extraction duct to either an inlet or an outlet of the suction HVAC unit.
12. A vehicle comprising:
   a cabin;
   a dashboard;
   a windshield; and
   a vehicle HVAC system comprising:
      a suction HVAC unit comprising a plenum;
      a hot air pocket extraction duct connected to the plenum;
      one or more suction intakes positioned in a region between the windshield and the dashboard and connected to the hot air pocket extraction duct, wherein the hot air pocket extraction duct is configured to draw hot air from a hot air pocket in the region through the one or more suction intakes into the plenum;
      one or more air outlets connected to the plenum; and
      one or more air director valves configured to selectively direct conditioned air from the plenum to the one or more air outlets.
13. A method of controlling climate in a vehicle cabin, the method comprising:
   activating a suction HVAC unit to create suction pressure;
   drawing hot air from a hot air pocket in the vehicle cabin through one or more suction intakes connected to a hot air pocket extraction duct;
   cooling the drawn hot air in the suction HVAC unit; and
   distributing the cooled air back into the vehicle cabin.
14. The method of clause 13, wherein the one or more suction intakes comprise at least one dashboard suction intake configured to be mounted in a dashboard of the vehicle cabin.
15. The method of clause 13 or 14, wherein the one or more suction intakes comprise at least one roof suction intake configured to be mounted in a roof of the vehicle cabin.
16. The method of any one of clauses 13-15, further comprising:
   detecting a temperature in the vehicle cabin; and
   activating the suction HVAC unit based on a detected temperature.
17. A method of manufacturing a vehicle having a climate control system, the method comprising:
   installing a suction HVAC apparatus in the vehicle, the suction HVAC apparatus comprising:
   a suction HVAC unit including a plenum;
   a recirculation inlet connected to the plenum;
   a hot air pocket extraction duct connected to the plenum; and
   one or more suction intakes connected to the hot air pocket extraction duct;
   positioning the one or more suction intakes in regions prone to hot air pocket formation in a vehicle cabin;
   connecting the suction HVAC unit to a vehicle climate control system; and
   configuring the vehicle climate control system to selectively activate the suction HVAC unit to draw hot air from hot air pockets through the one or more suction intakes.
18. The method of clause 17, further comprising:
   installing at least one dashboard suction intake in a region between a windshield and a dashboard of the vehicle; and
   installing at least one roof suction intake in a region of a roof of the vehicle.
19. The method of clause 17 or 18, further comprising:
   installing a valve configured to selectively connect the hot air pocket extraction duct to either an inlet or an outlet of the suction HVAC unit, thereby enabling the hot air pocket extraction duct to be used for both hot air extraction and windshield defrosting.
20. A method of optimizing a vehicle HVAC system, comprising:
   identifying regions in a vehicle cabin prone to hot air pocket formation;
   installing a hot air pocket extraction duct and suction intake configuration to target the identified regions;
   integrating the installed hot air pocket extraction duct and suction intake configuration with a suction HVAC unit;
   testing the integrated system to measure temperature gradients in the vehicle cabin; and
   adjusting the suction HVAC unit configuration based on the measured temperature gradients to maximize thermal comfort and minimize energy consumption.

It will also be appreciated that one or more of the elements depicted in the drawings/figures can also be implemented in a more separated or integrated manner, or even removed or rendered as inoperable in certain cases, as is useful in accordance with a particular application. While the above is a detailed description of some examples of the inventive subject matter, various alternatives, modifications, and equivalents may be used. Therefore, the above description should not be taken as limiting the scope of the inventive subject matter which is defined by the appended claims.

## Claims

1. A Heating, Ventilation, and Air Conditioning (HVAC) apparatus for a vehicle, comprising:
a suction HVAC unit comprising a plenum;
a hot air pocket extraction duct connected to the plenum; and
one or more suction intakes connected to the hot air pocket extraction duct, wherein the hot air pocket extraction duct is configured to draw hot air from a hot air pocket in the vehicle through the one or more suction intakes into the plenum.

2. The HVAC apparatus of claim 1, wherein the one or more suction intakes comprise at least one dashboard suction intake configured to be mounted in a dashboard of the vehicle.

3. The HVAC apparatus of claim 1 or 2, wherein the one or more suction intakes comprise at least one roof suction intake configured to be mounted in a roof of the vehicle.

4. The HVAC apparatus of any one of the preceding claims, further comprising a recirculation inlet connected to the plenum; and optionally
further comprising a circulation fan disposed in the plenum and configured to create suction pressure to draw air through the recirculation inlet and the hot air pocket extraction duct.

5. The HVAC apparatus of any one of the preceding claims, further comprising one or more heating or cooling coils disposed in the plenum; or optionally
further comprising an actuator configured to selectively open and close the one or more suction intakes.

6. A vehicle HVAC system the HVAC apparatus of claim 1, further comprising:
one or more air outlets connected to the plenum; and
one or more air director valves configured to selectively direct conditioned air from the plenum to the one or more air outlets.

7. The vehicle HVAC system of claim 6, wherein the one or more suction intakes comprise at least one dashboard suction intake configured to be mounted in a dashboard of the vehicle, or at least one roof suction intake configured to be mounted in a roof of the vehicle.

8. The vehicle HVAC system of claim 7, wherein the one or more air outlets comprise at least one of:
one or more dashboard vents;
one or more instrument panel vents; and
one or more footwell vents; or optionally
further comprising a valve configured to selectively connect the hot air pocket extraction duct to either an inlet or an outlet of the suction HVAC unit.

9. A vehicle comprising the vehicle HVAC system of any one of claims 6-8, and further comprising:
a cabin;
a dashboard;
a windshield; and

10. A method of controlling climate in a vehicle cabin, the method comprising:
activating a suction HVAC unit to create suction pressure;
drawing hot air from a hot air pocket in the vehicle cabin through one or more suction intakes connected to a hot air pocket extraction duct;
cooling the drawn hot air in the suction HVAC unit; and
distributing the cooled air back into the vehicle cabin.

11. The method of claim 10, wherein the one or more suction intakes comprise at least one dashboard suction intake configured to be mounted in a dashboard of the vehicle cabin; or optionally
wherein the one or more suction intakes comprise at least one roof suction intake configured to be mounted in a roof of the vehicle cabin.

12. The method of claim 10, further comprising:
detecting a temperature in the vehicle cabin; and
activating the suction HVAC unit based on a detected temperature.

13. A method of manufacturing a vehicle having a climate control system, the method comprising:
installing a suction HVAC apparatus in the vehicle, the suction HVAC apparatus comprising:
a suction HVAC unit including a plenum;
a recirculation inlet connected to the plenum;
a hot air pocket extraction duct connected to the plenum; and
one or more suction intakes connected to the hot air pocket extraction duct;
positioning the one or more suction intakes in regions prone to hot air pocket formation in a vehicle cabin;
connecting the suction HVAC unit to a vehicle climate control system; and
configuring the vehicle climate control system to selectively activate the suction HVAC unit to draw hot air from hot air pockets through the one or more suction intakes.

14. The method of claim 13, further comprising:
installing at least one dashboard suction intake in a region between a windshield and a dashboard of the vehicle; and
installing at least one roof suction intake in a region of a roof of the vehicle; or optionally
installing a valve configured to selectively connect the hot air pocket extraction duct to either an inlet or an outlet of the suction HVAC unit, thereby enabling the hot air pocket extraction duct to be used for both hot air extraction and windshield defrosting.

15. A method of optimizing a vehicle HVAC system, comprising:
identifying regions in a vehicle cabin prone to hot air pocket formation;
installing a hot air pocket extraction duct and suction intake configuration to target the identified regions;
integrating the installed hot air pocket extraction duct and suction intake configuration with a suction HVAC unit;
testing the integrated system to measure temperature gradients in the vehicle cabin; and
adjusting the suction HVAC unit configuration based on the measured temperature gradients to maximize thermal comfort and minimize energy consumption.
